# EUROPÄISCHE PATENTANMELDUNG

(11) **EP 3 517 922 A1**
(43) Veröffentlichungstag der Anmeldung: **31.07.2019**
(21) Anmeldenummer: 18153593.1
(22) Anmeldetag: 26.01.2018
(51) Int. Cl.: G01M 1/32

(54) **AUSWUCHTEN EINER ROTORBAUGRUPPE**

(71) Anmelder: Sonplas GmbH, 94315 Straubing (DE)
(72) Erfinder: BIRKENEDER, Paul, 93501 Aldersbach (DE); STÖBIG, Josef, 94431 Pilsting / Ganacker (DE); FRANKL, Herbert, 94315 Straubing (DE)
(74) Vertreter: Wunderlich & Heim Patentanwälte Partnerschaftsgesellschaft mbB

(57) **Zusammenfassung**

Die Vorliegende Erfindung betrifft ein Verfahren und eine Vorrichtung zum Auswuchten einer Rotorbaugruppe, bei welchen eine Unwucht der Rotorbaugruppe festgestellt wird, und ein Wuchtgewicht bereitgestellt wird. Erfindungsgemäß ist es vorgesehen, dass eine Masse des Wuchtgewichts zum Mindern der Unwucht bestimmt wird, dass das Wuchtgewicht entsprechend der bestimmten Masse abgelängt wird, dass eine Position für das abgelängte Wuchtgewicht an der Rotorbaugruppe bestimmt wird, und dass das Wuchtgewicht an der bestimmten Position der Rotorbaugruppe angeordnet wird.

## Beschreibung

Die vorliegende Erfindung betrifft ein Verfahren zum Auswuchten einer Rotorbaugruppe gemäß dem Oberbegriff des Anspruch 1, eine Vorrichtung zur Fertigung einer ausgewuchteten Rotorbaugruppe gemäß dem Oberbegriff des Anspruchs 7 sowie eine Rotorbaugruppe gemäß Anspruch 12.

Bei einem solchen Verfahren wird eine Unwucht einer Rotorbaugruppe festgestellt und ein Wuchtgewicht bereitgestellt.

Bei einer solchen Vorrichtung ist eine Auswuchteinrichtung vorgesehen, welche ausgebildet ist, eine festgestellte Unwucht der Rotorbaugruppe zu mindern.

Eine solche Rotorbaugruppe weist einer Welle, um dessen Achse die Rotorbaugruppe angeordnet ist, und mindestens einem Blechpaket auf, welches rotationssymmetrisch zu der Welle ausgebildet ist.

Rotoren, insbesondere von Elektromotoren, müssen in der Regel während der Herstellung gewuchtet werden, um unerwünschten Vibrationen und erhöhten Lagerbelastungen vorzubeugen. Es sind hierbei die Bestimmung einer Unwucht und anschließend die Beseitigung der selbigen erforderlich. Für die Beseitigung der Unwucht wird üblicherweise Material an bestimmten, während der Wuchtmessung ermittelten, Punkten der Rotorbaugruppe hinzugefügt oder entfernt. Bekannte Verfahren, um Material an der Rotorbaugruppe dauerhaft zu befestigen, umfassen das Vorsehen von Schrauben oder Nieten an der Rotorbaugruppe. Nachteil dieser Verfahren ist es, dass die Wuchtgewichte mit definierter Masse zur Verfügung gestellt werden und somit die Gefahr einer unerwünscht hohen Restunwucht bestehen bleibt.

Eine bekannte Alternative hierzu stellt die Aufbringung von Harzen dar, die zwar in beliebiger Masse und ohne Abstufung aufgebracht werden können. Diese benötigen aber Zeit zur Aushärtung. Zudem haben Harze nur über eine geringe Dichte, so dass bei großen Rotorbaugruppen unter Umständen erhebliche Harzvolumen aufgetragen werden müssen.

Weiterhin bekannt ist auch das Aufbringen von Lötpasten zur Korrektur der Unwucht. Um eine dauerhafte Verbindung des Lotes mit dem Rotor zu gewährleisten, muss der Rotor einen Lötprozess durchlaufen, wobei sichergestellt werden muss, dass die Lötmasse während der Flüssigphase den Auftragsort nicht verlässt, damit die Wuchtgüte nicht verschlechtert wird.

Alternativ kann zur Erreichung der gewünschten Wuchtgüte an konstruktiv dafür vorgesehenen Bauteilen des Rotors Wuchtmasse abgetragen werden. Die errechnete Wuchtmasse wird an den ermittelten Punkten durch Einbringen von Bohrungen und durch Fräsen entfernt. Nachteilig bei diesem Verfahren sind der für die spannende Bearbeitung erforderliche Zeit- und Kostenaufwand sowie die damit verbundene Spanbildung, die bei bereits magnetisierten Rotoren häufig eine unerwünschte Verschmutzung der Rotoroberfläche verursacht.

Gerade im Bereich des Elektromotorbaus, insbesondere der automobilen Serienproduktion von Hochleistung-Traktionsantrieben, welche in hoher Stückzahl gefertigt werden, ist es erforderlich, ein effizientes Wuchtverfahren bereitzustellen.

Die vorliegende Erfindung stellt sich die **Aufgabe**, ein Verfahren und eine Vorrichtung zum Auswuchten einer Rotorbaugruppe bereitzustellen, welche eine individuelle Anpassung der Rotorbaugruppe an die festgestellte Unwucht bei geringer Anpassungszeit ermöglicht. Weiterhin soll eine entsprechend gewuchtete Rotorbaugruppe angegeben werden.

Die Aufgabe wird durch ein Verfahren mit den Merkmalen des Anspruchs 1, eine Vorrichtung mit den Merkmalen des Anspruchs 7 sowie durch eine Rotorbaugruppe gemäß Anspruch 12 gelöst.

Bevorzugte Ausführungsformen der Erfindung sind in den jeweils abhängigen Ansprüchen angegeben.

Das erfindungsgemäße Verfahren ist dadurch gekennzeichnet, dass eine Masse des Wuchtgewichts zum Mindern der Unwucht bestimmt wird, dass das Wuchtgewicht entsprechend der bestimmten Masse abgelängt wird, dass eine Position für das abgelängte Wuchtgewicht an der Rotorbaugruppe bestimmt wird, und dass das Wuchtgewicht an der bestimmten Position der Rotorbaugruppe angeordnet wird.

Nach einem ersten Grundgedanken der vorliegenden Erfindung wird ein Verfahren bereitgestellt, bei welchem ein Wuchtgewicht, welches insbesondere als Festkörper bereitgestellt ist, individuell an eine bestehende Unwucht einer Rotorbaugruppe angepasst wird. Dieses individuelle Wuchtgewicht kann an der Rotorbaugruppe, an einer dafür vorgesehenen Stelle, angeordnet werden. Die dafür vorgesehene Stelle kann dabei insbesondere entlang des Außenumfangs einer Welle, eines Flansches, eines Blechpakets und/oder sonstiger Bauteile der Rotorbaugruppe und/oder koaxial zu diesen stirnseitig vorgesehen sein. Das Befestigen des Wuchtgewichts an der vorgesehenen Stelle kann hierbei zu einer Minderung der Unwucht beitragen.

Erfindungsgemäß ist mit einer Minderung der Unwucht jene Verbesserung zu verstehen, welche einen ruhigeren Rotationslauf der Rotorbaugruppe um seine Rotationsachse ermöglicht. Grundsätzlich kann erfindungsgemäß unter einer Minderung auch eine Beseitigung, also eine vollständige Entfernung der Unwucht zu verstehen sein.

Erfindungsgemäß kann mit der bestimmten Position zum einen eine Anfangsposition zu verstehen sein, von welcher ausgehend das abgelängte Wuchtgewicht mit oder gegen den Uhrzeigersinn an der Rotorbaugruppe vorgesehen werden kann. Alternativ hierzu kann die bestimmte Position auch eine Mittenposition sein, von welcher ausgehend sich das Wuchtgewicht an der Rotorbaugruppe zu beiden Seiten hin zumindest in etwa gleichmäßig umfangsseitig und/oder koaxial erstreckt. Darüber hinaus kann erfindungsgemäß die bestimmte Position jeder Punkt oder Bereich auf der Rotorbaugruppe sein, welche eine eindeutige Zuordnung des Wuchtgewichts an der Rotorbaugruppe ermöglicht.

Insbesondere aus fertigungstechnischen Gründen kann es vorteilhaft sein, vor und/oder hinter dem Blechpaket einer Rotorbaugruppe einen Flansch vorzusehen, an welchem das Wuchtgewicht befestigt wird. An der Rotorbaugruppe kann hierfür eine Nut vorgesehen werden, in welcher das Wuchtgewicht eingebracht beziehungsweise gefügt wird.

Eine zweckmäßige Weiterbildung der vorliegenden Erfindung besteht darin, dass das Wuchtgewicht als Profildraht- oder -stabmaterial bereitgestellt wird. Das Wuchtgewicht kann vorzugsweise als Endlosmaterial bzw. als Vorratsmaterial bereitgestellt werden, von welchem das jeweilige Wuchtgewicht für die auszuwuchtende Rotorbaugruppe abgelängt wird. Der Profildraht- oder -stabmaterial kann hierbei in seiner Form an eine Oberflächenbeschaffenheit der Rotorbaugruppe angepasst sein. Hierdurch kann eine besonders formschlüssige Verbindung zwischen Rotorbaugruppe und dem Wuchtgewicht bereitgestellt werden.

Besonders zweckmäßig ist es nach einer Weiterbildung der Erfindung, dass das Wuchtgewicht in eine Aufnahmenut an der Rotorbaugruppe eingebracht wird, welche vorzugsweise in Umfangsrichtung an der Rotorbaugruppe verläuft. Die vorzugsweise ringförmige Aufnahmenut kann grundsätzlich an einer beliebigen Stelle der Rotorbaugruppe vorgesehen sein. Besonders zweckmäßig ist es jedoch, dass die Nut im Bereich eines Flansches oder der Welle der Rotorbaugruppe vorgesehen ist. Die Aufnahmenut kann als radiale Vertiefung insbesondere an einem Außenumfang der Rotorbaugruppe vorgesehen sein. Alternativ oder ergänzend kann die Aufnahmenut als axiale Vertiefung, insbesondere an einer Stirnseite eines Elements der Rotorbaugruppe, vorzugsweise konzentrisch zur Rotationsachse, vorgesehen sein. Die voranstehend beschriebene Aufnahmenut und das Wuchtgewicht können hierbei in ihrer Form aufeinander abgestimmt sein, wodurch ein besonders vorteilhaftes Anhaften oder Fügen des Wuchtgewichts mit der Rotorbaugruppe ermöglicht ist. Insbesondere können eine Breite der Aufnahmenut und eine Außenabmessung des Wuchtgewichtes eine definierte Presspassung bilden. Zwischen der Aufnahmenut und dem Wuchtgewicht kann insbesondere eine form- und/oder kraftschlüssige Press- oder Fügeverbindung bestehen.

Nach einer vorteilhaften Weiterbildung der vorliegenden Erfindung ist es vorgesehen, dass das Bestimmen der Unwucht und das Beseitigen der Unwucht iterativ durchgeführt werden, bis eine bestimmte Wuchtgüte erreicht ist. Grundsätzlich kann, insbesondere aufgrund der individuellen Anpassung der Masse des Wuchtgewicht an eine bestehende Unwucht der Rotorbaugruppe, bereits durch das Vorsehen eines einzelnen abgelängt Wuchtgewichts definierter Masse, eine Wuchtgüte bereitgestellt sein, welche für das jeweilige Produktionsziel ausreichend ist. Sollte diese jedoch nach dem Bereitstellen eines ersten abgelängten Wuchtgewichts noch nicht erreicht sein, kann die Masse für ein weiteres Wuchtgewicht sowie dessen Position an der Rotorbaugruppe bestimmt werden und ein entsprechend abgelängtes Wuchtgewicht an der bestimmten Position vorgesehen werden. Dieser Vorgang kann grundsätzlich so lange wiederholt werden, bis eine gewünschte Wuchtgüte erreicht wird, also eine maximale Unwucht bei Rotation der Rotorbaugruppe einen vordefinierten Grenzwert nicht mehr überschreitet.

Ergänzend oder alternativ hierzu kann das Wuchtgewicht mittels eines Kerb-, Crimp- oder Schweißprozesses fixiert werden. Insbesondere kann eine stoffschlüssige Verbindung erstellt werden. Hierdurch ist eine besonders ortsfeste Fixierung des Wuchtgewichts an der bestimmten Position der Rotorbaugruppe ermöglicht.

Die erfindungsgemäße Vorrichtung ist dadurch gekennzeichnet, dass die Auswuchteinrichtung eine Trenneinheit, welche ausgebildet ist, basierend auf der festgestellten Unwucht ein längliches Wuchtgewicht abzulängen, wobei das abgelängte Wuchtgewicht eine Masse zum Mindern der Unwucht umfasst, und eine Markiereinheit aufweist, welche ausgebildet ist, eine Position für das abgelängte Wuchtgewicht an der Rotorbaugruppe zu bestimmen. Grundsätzlich kann erfindungsgemäß auch von einem Auswuchtsystem mit mehreren Komponenten gesprochen werden. Mit der Vorrichtung können insbesondere das vorbeschriebene Verfahren durchgeführt und die genannten Vorteile erzielt werden.

Nach einem weiteren Grundgedanken der vorliegenden Erfindung ist es vorgesehen, eine Auswuchteinrichtung mit Mitteln zum Ablängen eines Wuchtgewichts bereitzustellen, wodurch die Masse des Wuchtgewichts an eine festgestellte Unwucht einer Rotorbaugruppe anpassbar ist. Weiterhin kann mittels einer Markiereinheit die Position für das abgelängte Wuchtgewicht festgelegt werden. Wuchtgewicht unter Rotorbaugruppe können grundsätzlich sowohl maschinell als auch manuell miteinander verbunden werden. In beiden Fällen kann die bestimmte Position für eine Anordnung des Wuchtgewichts an der Rotorbaugruppe herangezogen werden.

Hinsichtlich der Minderung der Unwucht beziehungsweise der Position des Wuchtgewichts an der Rotorbaugruppe bestehen dieselben Grundsätze wie bezüglich des erfindungsgemäßen Verfahrens.

Die Trenneinheit kann eine Zuführeinrichtung aufweisen, welche ausgebildet ist, das Wuchtgewicht etwa mit einer Schneidkante positionsgenau zuzuführen. Durch das positionsgenaue Zuführen kann die Trenneinheit ein Wuchtgewicht gewünschter Masse besonders präzise ablängen. Die Trenneinheit kann eine Säge oder vorzugsweise eine spanfrei arbeitende Stanz- oder Abschneideeinrichtung sein.

Nach einer vorteilhaften Weiterbildung der vorliegenden Erfindung ist es vorgesehen, dass eine Analyseeinrichtung vorgesehen ist, welche ausgebildet ist, die Unwucht der Rotorbaugruppe festzustellen, wobei die Analyseeinrichtung eine Recheneinheit aufweist, welche ausgebildet ist, basierend auf einer Dichte und/oder einer Geometrie des Wuchtgewichts, eine Länge des Wuchtgewichts zu bestimmen.

Grundsätzlich können die einzelnen Einrichtungen und Einheiten der erfindungsgemäßen Vorrichtung mit einer Recheneinheit verbunden sein, welche vorzugsweise als Teil einer Analyseeinrichtung vorgesehen ist. Mittels der Recheneinheit können die einzelnen Einrichtungen und Einheiten aufeinander abstimmbar sein, wodurch ein Auswuchten besonders hoher Güte bereitgestellt werden kann.

Das Wuchtgewicht kann grundsätzlich als Endlosmittel oder Standard-Stückwerk mit einer Länge bereitgestellt werden, welche länger ist, als die des benötigten, abgelenkten Wuchtgewichts. Das Wuchtgewicht, insbesondere ein Metalldraht kann daher vor seinem Ablängen auch als Wuchtgewichtsvorrat bezeichnet werden, von welchem ein Wuchtgewicht gewünschter Masse ablängbar ist. Ist die Dichte und/oder die Geometrie des Vorrats bekannt, kann die benötigte Masse bereits aufgrund einer Längenangabe bedarfsgerecht bereitgestellt werden. Das Verhältnis zwischen Dichte und Masse eines Körper bestimmter länge bei gleich bleibendem Querschnitt ist dem Fachmann hinlänglich bekannt. Als Material kann insbesondere Kunststoff oder Metall vorgesehen sein, welches plastisch verformbar ist.

Nach einer vorteilhaften Weiterbildung der vorliegenden Erfindung ist es vorgesehen, dass die Analyseeinrichtung mit der Markiereinheit in Verbindung steht und Daten an diese bereitstellt, welche die Bestimmung der Position für das Wuchtgewicht ermöglichen und/oder dass die Analyseeinrichtung mit der Trenneinheit in Verbindung steht und Daten bereitstellt, welche das Ablängen des Wuchtgewichts gewünschter Länge ermöglichen. Grundsätzlich kann das Ablängen des Wuchtgewichts sowie das Bestimmen einer Position für das abgelängte Wuchtgewicht auf der Rotorbaugruppe automatisiert bei der Bestimmung der Unwucht durch die Analyseeinheit erfolgen. Hierbei werden vorzugsweise Informationen aus der Bestimmung der Unwucht, also aus dem Analyseprozess, an die einzelnen Einrichtungen und Einheiten der Auswuchteinrichtung bereitgestellt. Diese können insbesondere sowohl Informationen hinsichtlich der Größe, der Masse beziehungsweise Länge der Unwucht als auch ihrer Ausrichtung auf der Rotorbaugruppe aufweisen.

Basierend auf diesen Informationen kann die Analyseeinrichtung oder die Trenneinheit, beziehungsweise die Markiereinheit, Länge und Lage für das abgelängte Wuchtgewicht ermitteln. Die Trenneinheit ist ausgebildet, basierend auf der ermittelten Länge, Masse und/oder Querschnittsgröße von dem Wuchtgewichtsvorrat ein Wuchtgewicht entsprechender Länge abzutrennen. Die Information hinsichtlich einer Position für das abgelängte Wuchtgewicht kann beispielsweise auf der Rotorbaugruppe in Form einer Markierung hinterlegt werden oder an eine Fügeeinrichtung übermittelt werden, welche ausgebildet ist, das abgelenkte Wuchtgewicht positionsgenau an der Rotorbaugruppe anzuordnen.

Besonders bevorzugt ist das Wuchtgewicht als Profildraht- oder -stabmaterial bereitgestellt, welcher beispielsweise als Rolle oder längliche, stabförmigen Vorräte für das Wuchtgewicht ausgebildet sind.

Nach einer Weiterbildung der vorliegenden Erfindung ist es vorgesehen, dass eine Fügeeinrichtung vorgesehen ist, welche ausgebildet ist, das Wuchtgewicht an der Rotorbaugruppe positionsgenau zu fixieren. Grundsätzlich kann die Fixierung durch form- und/oder kraftschlüssige Verbindung zwischen der Rotorbaugruppe und dem Wuchtgewicht erfolgen. Hierfür kann eine Aufnahmenut oder eine anderweitige Vertiefung an der Rotorbaugruppe vorgesehen sein, in welche die Wuchtmasse, vorzugsweise formschlüssig, eingreifen kann. Zusätzlich zu der Fügeverbindung kann eine Kerb-, Crimp- oder Schweißverbindung zwischen Wuchtgewicht und der Rotorbaugruppe, insbesondere der Aufnahmenut, vorgesehen werden.

Mittels des voranstehend beschriebenen Prozesses beziehungsweise der Vorrichtung ist eine Rotorbaugruppe bereitstellbar, welche eine Welle, um dessen Achse die Rotorbaugruppe rotierbar ist, und mindestens ein Blechpaket aufweist, welches rotationssymmetrisch zu der Welle ausgebildet ist.

Erfindungsgemäß ist es vorgesehen, dass die Rotorbaugruppe mit mindestens einem Flansch ausgebildet ist, welcher vorzugsweise koaxial zu Welle verläuft, dass der

Flansch mit einer Aufnahmenut ausgebildet ist, in welcher ein abgelängtes Wuchtgewicht angebracht ist, wobei die Position und Masse des Wuchtgewichts zumindest in etwa einer Unwucht der Rotorbaugruppe ohne Wuchtgewicht entspricht. Vorzugsweise entspricht die Masse des Wuchtgewichts der Unwucht der Rotorbaugruppe also der Masse, die notwendig ist, bei korrekter Positionierung der Wuchtmasse an der Rotorbaugruppe, die Unwucht zu beseitigen.

Eine Welle im Sinne der Erfindung kann ein stabförmiges Element, an dessen radialer Außenseite Drehlager angeordnet werden, oder ein Hohlwellenelement sein, bei welchem die Drehlager an einer radialen Innennut vorgesehen sind.

Die vorliegende Erfindung wird weiterhin anhand der beigefügten Zeichnungen beschrieben. Diese zeigt in
- Fig.1: eine seitliche Querschnittsansicht einer erfindungsgemäß gewuchteten Rotorbaugruppe,
- Fig.2: eine vergrößerte Ansicht der Fügestelle zwischen Wuchtgewicht und Rotorbaugruppe.

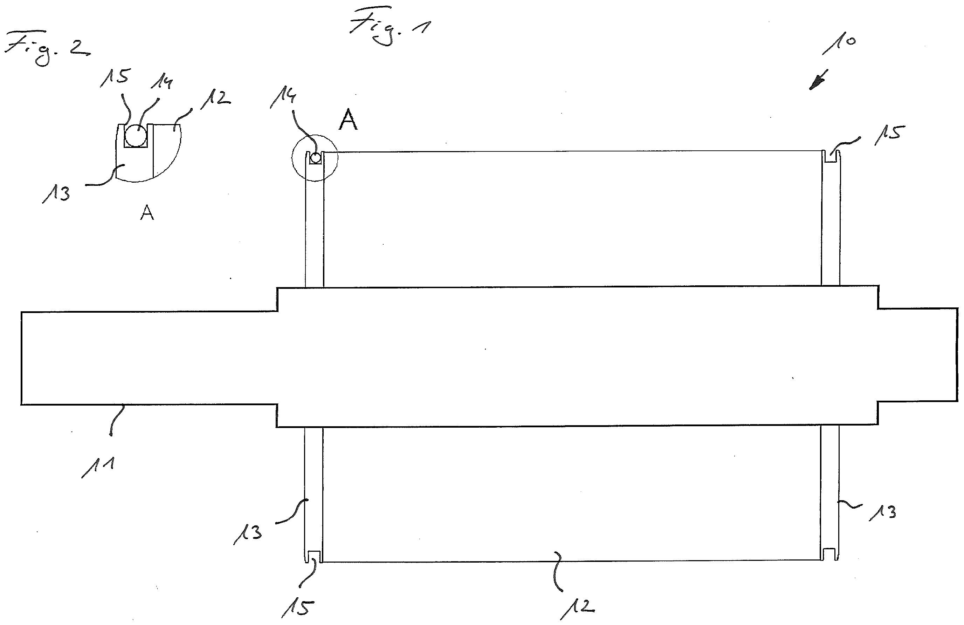

Fig.1 zeigt eine gewuchtete Rotorbaugruppe 10, welche mit einer rotationssymmetrischen Welle 11 ausgebildet ist. Um die Welle 11 ist in einem mittleren Bereich ein Blechpaket 12 angeordnet, welches einen Teil des rotierenden Teils eines Elektromotors darstellen kann. Vorzugsweise sind Welle 11 und Blechpaket 12 miteinander gefügt, wodurch das Blechpaket 12 ortsfest auf der Welle 11 angeordnet ist. Endseitig sind im Anschluss an das Blechpaket 12 zwei Flansche 13 angeordnet, welche entlang der Welle 11 vor beziehungsweise hinter dem Blechpaket 12 angeordnet sind.

Für die Bestimmung einer Unwucht der Rotorbaugruppe 10 wird diese in Rotation versetzt und es werden eine Laufunruhe beziehungsweise Unwucht der Größe und der Richtung/Lage nach zu bestimmt. Hierdurch kann die Länge und Position für ein Wuchtgewicht 14 an der Rotorbaugruppe 10 bestimmt werden, um die Unwucht zu mindern beziehungsweise zu entfernen. Die Dichte und Querschnittsgröße des Wuchtmaterials ist hierfür jeweils bekannt. In Abhängigkeit von der Größe der Unwucht wird das Wuchtgewicht 14 mit einer entsprechenden Masse bereitgestellt, welche der Größe der Unwucht zumindest in etwa entspricht, um diese zu kompensieren. Vorzugsweise entspricht die Masse des Wuchtgewichts 14 der Größe der Unwucht.

Das Wuchtgewicht 14 ist gemäß Fig. 1 in einem linken oberen Bereich umfangsseitig an dem vorderen Flansch 13 in einer ringförmigen Aufnahmenut 15 mit einer definierten Länge angeordnet. Die Aufnahmenut 15 hat einen rechteckigen Querschnitt mit einer definierten Breite.

Wie insbesondere aus Fig. 2 hervorgeht ist das Wuchtgewicht 14 in der Nut 15 zumindest zwischen einer linken und einer rechten Wandung formschlüssig angeordnet, was einem Verrutschen oder Herausfallen vorbeugen kann. Das drahtartige, plastisch verformbare Unwuchtgewicht 14, welches definiert abgelängt wurde, hat einen kreisrunden Querschnitt. Der Durchmesser ist dabei etwas größer als die Breite der Aufnahmenut 15. Beim Einpressen oder Fügen der vorzugsweise metallischen Unwuchtgewicht 14 ergibt sich so eine definierte Presspassung und damit eine gute Lagesicherung.

Für einen besonders festen Sitz des Wuchtgewichts 14 in der Nut 15 können die beiden Elemente noch zusätzlich miteinander verbunden werden. Hierfür kann beispielsweise eine Kerb-, Crimp- oder Schweißverbindung bereitgestellt werden. Die exakte Position für das Wuchtgewicht kann während der Unwuchtmessung ebenfalls bestimmt werden. Die Position kann beispielsweise mittels lichtbildgebender Maßnahmen, wie beispielsweise einen Laser oder eine Lichtschablone, eine farbliche Markierung oder Kerbung, an der Rotorbaugruppe angezeigt werden.

Alternativ oder ergänzend hierzu kann die berechnete Position für das Wuchtgewicht 14 an eine Einrichtung übermittelt werden, welche ein abgelängtes Wuchtgewicht 14 automatisch an der entsprechenden Stelle der Rotorbaugruppe 10 vorsieht.

## Patentansprüche

1. Verfahren zum Auswuchten einer Rotorbaugruppe (10), bei welchem
eine Unwucht der Rotorbaugruppe (10) festgestellt wird, und
ein Wuchtgewicht (14) bereitgestellt wird,
**dadurch gekennzeichnet,**
**dass** eine Masse des Wuchtgewichts (14) zum Mindern der Unwucht bestimmt wird,
**dass** das Wuchtgewicht (14) entsprechend der bestimmten Masse abgelängt wird, dass eine Position für das abgelängte Wuchtgewicht (14) an der Rotorbaugruppe bestimmt wird, und
**dass** das Wuchtgewicht (14) an der bestimmten Position der Rotorbaugruppe (10) angeordnet wird.

2. Verfahren nach Anspruch 1,
**dadurch gekennzeichnet,**
**dass** das Wuchtgewicht (14) in einer Aufnahmenut (15) an der Rotorbaugruppe (10) eingebracht wird, welche vorzugsweise in Umfangsrichtung an der Rotorbaugruppe (10) verläuft.

3. Verfahren nach einem der Ansprüche 1 oder 2,
**dadurch gekennzeichnet,**
**dass** das Wuchtgewicht (14) als Profildraht- oder -stabmaterial bereitgestellt wird.

4. Verfahren nach einem der Ansprüche 1 bis 3,
**dadurch gekennzeichnet,**
**dass** das Bestimmen der Unwucht und das Beseitigen der Unwucht iterativ durchgeführt werden, bis eine bestimmte Wuchtgüte erreicht ist.

5. Verfahren nach einem der Ansprüche 1 bis 4,
**dadurch gekennzeichnet,**
**dass** das Wuchtgewicht (14) in die Aufnahmenut (15) form- und/oder kraftschlüssig gefügt wird.

6. Verfahren nach einem der Ansprüche 1 bis 5,
**dadurch gekennzeichnet,**
**dass** das Wuchtgewicht (14) mittels eines Kerb-, Crimp- oder Schweißprozesses fixiert wird.

7. Vorrichtung zur Fertigung einer ausgewuchteten Rotorbaugruppe mit
einer Auswuchteinrichtung, welche ausgebildet ist, eine festgestellte Unwucht der Rotorbaugruppe (10) zu mindern, insbesondere nach einem der Ansprüche 1 bis 6
**dadurch gekennzeichnet,**
**dass** die Auswuchteinrichtung
- eine Trenneinheit, welche ausgebildet ist, basierend auf der festgestellten Unwucht ein längliches Wuchtgewicht (14) abzulängen, wobei das abgelängte Wuchtgewicht (14) eine Masse zum Mindern der Unwucht aufweist, und
- eine Markiereinheit aufweist, welche ausgebildet ist, eine Position für das abgelängte Wuchtgewicht (14) an der Rotorbaugruppe (10) zu bestimmen.

8. Vorrichtung nach Anspruch 7,
**dadurch gekennzeichnet,**
**dass** eine Analyseeinrichtung vorgesehen ist, welche ausgebildet ist, die Unwucht der Rotorbaugruppe (10) festzustellen, wobei die Analyseeinrichtung eine Recheneinheit aufweist, welche ausgebildet ist, basierend auf einer Dichte und/oder einer Geometrie des Wuchtgewichts (14), eine Länge des Wuchtgewichts (14) zu bestimmen.

9. Vorrichtung nach einem der Ansprüche 7 oder 8,
**dadurch gekennzeichnet,**
**dass** die Analyseeinrichtung mit der Markiereinheit in Verbindung steht und Daten an diese bereitstellt, welche die Bestimmung der Position für das Wuchtgewicht (14) ermöglichen, und/oder
**dass** die Analyseeinrichtung mit der Trenneinheit in Verbindung steht und Daten bereitstellt, welche das Ablängen des Wuchtgewichts (14) gewünschter Länge ermöglichen.

10. Vorrichtung nach Anspruch 6,
**dadurch gekennzeichnet,**
**dass** das Wuchtgewicht (14) als Profildraht- oder -stabmaterial bereitgestellt ist.

11. Vorrichtung nach einem der Ansprüche 6 oder 7,
**dadurch gekennzeichnet,**
**dass** eine Fügeeinrichtung vorgesehen ist, welche ausgebildet ist, das Wuchtgewicht (14) an der Rotorbaugruppe (10) positionsgenau zu fixieren.

12. Rotorbaugruppe mit
einer Welle, um dessen Achse die Rotorbaugruppe (10) angeordnet ist, und mindestens einem Blechpaket (12), welches rotationssymmetrisch zu der Welle (11) ausgebildet ist,
**dadurch gekennzeichnet,**
**dass** die Rotorbaugruppe (10) mit mindestens einem Flansch (13) ausgebildet ist, welcher vorzugsweise koaxial zur Welle (11) verläuft,
**dass** der Flansch (13) mit einer Aufnahmenut (15) ausgebildet ist, in welcher ein abgelängtes Wuchtgewicht (14) angebracht ist, wobei die Position und Masse des Wuchtgewichts (14) zumindest in etwa einer Unwucht der Rotorbaugruppe (10) ohne Wuchtgewicht entspricht.

## Geänderte Patentansprüche

### Geänderte Patentansprüche gemäss Regel 137(2) EPÜ.

1. Verfahren zum Auswuchten einer Rotorbaugruppe (10), bei welchem
eine Unwucht der Rotorbaugruppe (10) festgestellt wird, und
ein Wuchtgewicht (14) bereitgestellt wird,
wobei
eine Masse des Wuchtgewichts (14) zum Mindern der Unwucht bestimmt wird, das Wuchtgewicht (14) entsprechend der bestimmten Masse abgelängt wird, eine Position für das abgelängte Wuchtgewicht (14) an der Rotorbaugruppe bestimmt wird, und
das Wuchtgewicht (14) an der bestimmten Position der Rotorbaugruppe (10) angeordnet wird,
**dadurch gekennzeichnet,**
**dass** an der Rotorbaugruppe (10) eine ringförmige Aufnahmenut (15) vorgesehen wird, welche in Umfangsrichtung an der Rotorbaugruppe (10) verläuft, dass das Wuchtgewicht (14) als Profildraht- oder -stabmaterial bereitgestellt wird und
**dass** das Wuchtgewicht (14) in die Aufnahmenut (15) an der Rotorbaugruppe (10) eingebracht und kraftschlüssig eingefügt wird.

2. Verfahren nach Anspruch 1,
**dadurch gekennzeichnet,**
**dass** das Bestimmen der Unwucht und das Beseitigen der Unwucht iterativ durchgeführt werden, bis eine bestimmte Wuchtgüte erreicht ist.

3. Verfahren nach Anspruch 1 oder 2,
**dadurch gekennzeichnet,**
**dass** das Wuchtgewicht (14) in die Aufnahmenut (15) formschlüssig gefügt wird.

4. Verfahren nach einem der Ansprüche 1 bis 3,
**dadurch gekennzeichnet,**
**dass** das Wuchtgewicht (14) mittels eines Kerb-, Crimp- oder Schweißprozesses fixiert wird.

5. Vorrichtung zur Fertigung einer ausgewuchteten Rotorbaugruppe mit einer Auswuchteinrichtung, welche ausgebildet ist, eine festgestellte Unwucht der Rotorbaugruppe (10) zu mindern, nach einem der Ansprüche 1 bis 4,
**dadurch gekennzeichnet,**
**dass** die Auswuchteinrichtung
- eine Trenneinheit, welche ausgebildet ist, basierend auf der festgestellten Unwucht ein längliches Wuchtgewicht (14) abzulängen, wobei das abgelängte Wuchtgewicht (14) eine Masse zum Mindern der Unwucht aufweist, und
- eine Markiereinheit aufweist, welche ausgebildet ist, eine Position für das abgelängte Wuchtgewicht (14) an einer ringförmigen Aufnahmenut (15) der Rotorbaugruppe (10) zu bestimmen und festzulegen.

6. Vorrichtung nach Anspruch 5,
**dadurch gekennzeichnet,**
**dass** eine Analyseeinrichtung vorgesehen ist, welche ausgebildet ist, die Unwucht der Rotorbaugruppe (10) festzustellen, wobei die Analyseeinrichtung eine Recheneinheit aufweist, welche ausgebildet ist, basierend auf einer Dichte und/oder einer Geometrie des Wuchtgewichts (14) eine Länge des Wuchtgewichts (14) zu bestimmen.

7. Vorrichtung nach Anspruch 6,
**dadurch gekennzeichnet,**
**dass** die Analyseeinrichtung mit der Markiereinheit in Verbindung steht und Daten an diese bereitstellt, welche die Bestimmung der Position für das Wuchtgewicht (14) ermöglichen, und/oder
**dass** die Analyseeinrichtung mit der Trenneinheit in Verbindung steht und Daten bereitstellt, welche das Ablängen des Wuchtgewichts (14) gewünschter Länge ermöglichen.

8. Vorrichtung nach Anspruch 5,
**dadurch gekennzeichnet,**
**dass** das Wuchtgewicht (14) ein Profildraht- oder -stabmaterial ist.

9. Vorrichtung nach einem der Ansprüche 6 oder 7,
**dadurch gekennzeichnet,**
**dass** eine Fügeeinrichtung vorgesehen ist, welche ausgebildet ist, das Wuchtgewicht (14) in die Aufnahmenut (15) an der Rotorbaugruppe (10) positionsgenau zu fügen.

10. Rotorbaugruppe mit
einer Welle, um dessen Achse die Rotorbaugruppe (10) angeordnet ist, und mindestens einem Blechpaket (12), welches rotationssymmetrisch zu der Welle (11) ausgebildet ist,
wobei die Rotorbaugruppe (10) mit mindestens einem Flansch (13) ausgebildet ist, welcher vorzugsweise koaxial zur Welle (11) verläuft,
**dadurch gekennzeichnet,**
**dass** der Flansch (13) mit einer ringförmigen Aufnahmenut (15) ausgebildet ist, in welcher ein abgelängtes Wuchtgewicht (14) angebracht ist, wobei die Position und Masse des Wuchtgewichts (14) einer Unwucht der Rotorbaugruppe (10) ohne Wuchtgewicht entspricht.
